(19) Europäisches Patentamt
European Patent Office
Office européen des brevets

(11) **EP 2 616 223 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(21) Anmeldenummer: **11813665.4**

(22) Anmeldetag: **15.09.2011**

(51) Int Cl.:
**B29C 45/76** *(2006.01)*  **G05B 19/418** *(2006.01)*
**G06Q 10/06** *(2012.01)*  **G05B 23/02** *(2006.01)*

(86) Internationale Anmeldenummer:
**PCT/DE2011/075222**

(87) Internationale Veröffentlichungsnummer:
**WO 2012/048700 (19.04.2012 Gazette 2012/16)**

(54) **VERFAHREN ZUR FEHLER- UND AUSSCHUSSVERMEIDUNG BEIM BETRIEB EINER FERTIGUNGSMASCHINE**

METHOD FOR PREVENTING ERRORS AND REJECTS DURING THE OPERATION OF A PRODUCTION MACHINE

PROCÉDÉ PERMETTANT D'ÉVITER LES DÉFAILLANCES ET LES PIÈCES DÉFECTUEUSES LORS DU FONCTIONNEMENT D'UNE MACHINE DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2010 DE 102010037552**

(43) Veröffentlichungstag der Anmeldung:
**24.07.2013 Patentblatt 2013/30**

(73) Patentinhaber: **HBF**
**Fertigungssteuerungssysteme Dr. Bauer KG**
**66996 Fischbach bei Dahn (DE)**

(72) Erfinder: **BAUER, Heiko**
**76229 Karlsruhe (DE)**

(74) Vertreter: **Geitz Truckenmüller Lucht**
**Patentanwälte**
**Kriegsstrasse 234**
**76135 Karlsruhe (DE)**

(56) Entgegenhaltungen:
**EP-B1- 0 522 061    DE-C1- 19 801 881**

**Beschreibung**

Die vorliegende Erfindung betrifft ein Verfahren zum Betrieb einer Fertigungsmaschine, welcher ein Prozessrechner zugeordnet ist, der an der Maschinensteuerung Prozesswerte und Kurven erfasst, wobei eine Einteilung der produzierten Menge in Gut und Ausschuss erfolgt, neue Zielprozesswerte errechnet und verbesserte Einstelldaten zur Ausschussvermeidung bereitstellt.

Ein derartiges Verfahren ist bereits aus der deutschen Patentschrift DE 198 34 797 C2 vorbekannt. Dieses Dokument lehrt, dass die Einhaltung von Maschinenprozessparametern zur Klassifizierung der Werkstücke in Gutteile und Ausschussteile nicht ausreicht. Vielmehr werden im Rahmen der Herstellung von Werkstücken Messungen der Prozessparameter mittels beispielsweise im Werkzeug der Fertigungsmaschine angeordneter Sensoren durchgeführt, die entstehenden Kurven mit vorgegebenen Sollkurven verglichen und das Werkstück bei einer Abweichung von der jeweiligen Sollkurve als Ausschussteil klassifiziert.

Ein weiteres Verfahren, mithilfe dessen eine Sicherung der Materialqualität erreicht wird, ist aus der WO 2007/096248 A1 bekannt. Gegenstand dieser Anmeldung ist ein Verfahren zur Einfärbung von Kunststoffen aus einer Dosiereinrichtung. Dabei werden Informationen der Farbbehälter in maschinenlesbaren Speicherelementen gespeichert, um zu korrekten Farbwerten zu gelangen.

Ein beachtenswertes Verfahren zur Sicherung korrekten Fließverhaltens der Schmelze stellt die Übersetzung DE 691 26 700 T2 der europäischen Patentschrift EP 0 522 061 B1 dar. Dieses Verfahren umfasst die Schritte einer Eingabe einer Kennlinie des plastischen Fließens des geschmolzenen Materials, einer Analyse der Kennlinie der vorangegangenen Schusses, eines Vergleichs mit dieser Bezugskennlinie, eine Berechnung eines neuen Einstellwertes und schließlich der Einstellung der Spritzgießmaschine mit diesem Einstellwert.

All diese Verfahren haben gemeinsam, dass sie sich auf nur jeweils einen Aspekt des Spritzgießens beschränken. Die anderen Aspekte wirken aber trotzdem ungehindert weiter auf das verfolgte Ziel. Wenn also beispielsweise durch Variation des Prozesses Schlieren entstehen, so stimmt auch die Farbe nicht mehr. Zudem arbeiten alle genannten Verfahren mit sehr kleinen, spezifischen Datenmengen.

Zum allgemeinen Stand der Technik, Einstelldaten zu bestimmen, gehören ergänzend zu den vorgenannten Verfahren die Verfahren nach Tagushi/Shahinin, das Evolutionsverfahren sowie das Verfahren "Advanced Process Control". Diese Verfahren können aufgrund des erforderlichen Eingriffs des Menschen bei der Auswertung der Daten nur bei kleinen Datenmengen eingesetzt werden. Eine moderne Spritzgießmaschine hat jedoch beispielsweise mehr als einhundert Prozess- und Einstelldaten und würde mit den bekannten Verfahren eine zu große Anzahl von Versuchen benötigen, um zu vollständig optimierten Einstelldaten zu gelangen.

Es gibt erhebliche Erfolge im Bereich der Fließfertigung, insbesondere im Karrosseriebau und den Endmontagelinien, die Qualität der Endprodukte zu verbessern. Dies geschieht durch aufwändige Qualitätskontrolle im Bereich der Endmontage; die im Bereich der Vorfertigung verursachten Probleme können mit dieser Methodik nicht beseitigt werden.

Der bisher einzig erfolgreiche Weg, Fehler umfassend zu beseitigen, ist das so genannte Six Sigma DMAIC-Verfahren. Die Abkürzung "DMAIC" steht hierbei für "Define (Definieren), Measure (Messen), Analyze (Analysieren), Improve (Verbessern), Control (Kontrollieren)". Six Sigma lehrt, dass man Projekte neben der klassischen Qualitätssicherung durchführen soll, um Fehler zu beseitigen. Generelle Regel ist, dass ein Six Sigma Projekt durchgeführt werden soll, wenn man Fehler für mehr als 50.000€ pro Fehler beseitigen kann. Trotz der immens hohen Kosten erlebt Six Sigma einen Siegeszug. Die von Six Sigma verwendete Methodik ist Statistik, die von besonderen Spezialisten anzuwenden ist. Bei Six Sigma-Projekten geht man in den oben angesprochenen fünf Schritten vor.

Im ersten Schritt, der Definition, werden aus Kundensicht Fehler- und Ausschussgründe definiert. Die Anzahl der Fehler werden, nach Gründen geordnet, manuell erfasst und statistisch ausgewertet. Es gilt, die häufig auftretenden Fehler zu beseitigen.

Während des Messens werden an ausgewählten Stellen möglichst alle relevanten Daten erfasst, die den Fehler möglicherweise verursachen könnten.

Die erfassten Messwerte werden im Rahmen der Analyse von einem Spezialisten statistisch untersucht, um einen Zusammenhang zwischen dem Auftreten der Fehler und Variationen der Messwerte herzustellen.

Der Fehler soll nun bei der Verbesserung beseitigt werden, bevorzugtermaßen durch eine bessere Einstellung der Maschine. Dazu verwendet man die Ergebnisse der Analyse, um mögliche Fehler verursachende Stellgrößen zu identifizieren. Mit Hilfe von DOE ("Design of Experiments") bestimmt man dann bessere Einstelldaten.

Die erreichte Verbesserung wird schließlich während der Kontrollphase überwacht.

Dieses Verfahren führt zu den gewünschten Ergebnissen, ist aber für bestimmte Fertigungsverfahren, insbesondere das Urformen, viel zu teuer. Sofern der Wert des Ausschusses die hohen, für ein Six Sigma-Verfahren anfallenden Kosten nicht übersteigt oder auch nur erreicht, muss der Ausschuss daher bislang hingenommen oder nach den zuvor genannten Verfahren unvollständig beseitigt werden.

Vor diesem Hintergrund liegt der vorliegenden Erfindung daher die Aufgabe zu Grunde, das bekannte Six Sigma-Verfahren so zu automatisieren, dass es an Urformmaschinen, Bearbeitungsmaschinen und Montagemaschinen mittels der zugehörigen Maschinensteuerung und einem Prozessrechner mit analytischen Fähigkeiten durchgeführt werden kann. Das Ziel ist eine automatische Fehlerkorrektur durch neuberechnete Einstelldaten.

Voraussetzung ist hierbei, dass die Maschinen so ausreichend mit Sensoren versehen sind, dass Variationen des Prozesses, die Ausschuss verursachen, tatsächlich erfasst werden, es sich also um merkmalsvollständige Maschinen handelt.

Unter einer Wechselfließfertigung verstehen wir eine diskrete oder Semifließfertigung. Wichtige Fertigungsmaschinen in einer Wechselfließfertigung sind Urformmaschinen, Bearbeitungsmaschinen und Montagemaschinen.

Unter einer rückverfolgbaren Wechselfließfertigung verstehen wir eine Wechselfließfertigung, in der der Materialfluss mit Hilfe von Seriennummern und Tags, z. B. Barcode oder RFID, gesichert ist. In einer rückverfolgbaren Fertigung können also die Transportlose oder die einzelnen Teile oder Baugruppen elektronisch identifiziert werden.

Auch das erfindungsgemäße Verfahren gliedert sich hierzu, wie bereits das Six Sigma-Verfahren, in fünf Schritte, nämlich das Definieren, das Messen, das Klassifizieren, das Verbessern und die Vorhersage. Im Wesentlichen unterscheidet sich das Verfahren also durch die Schritte 3 und 5 vom Six Sigma-Verfahren. Außerdem ist das Six Sigma Verfahren eine Anweisung an den Menschen bzw. die Projektgruppe, das erfindungsgemäße Verfahren erfolgt automatisch durch Berechnungen eines Prozessrechners in Kommunikation mit der Maschinensteuerung.

Erforderlich ist im Verfahren zunächst, dass definiert wird, wann ein Fehler auftritt, der ein Werkstück zu einem Ausschussteil macht, und wann ein Werkstück als Gutteil anzusehen ist.

Fehler können automatisch durch Messinstrumente bestimmt werden, oder durch Personen klassifiziert werden. Da verschiedene Messinstrumente verschieden kalibriert sein können oder verschiedene Personen eine unterschiedliche Auffassung über gut und schlecht haben, sind die Informationen, woher das attributive Merkmal stammt, durchaus wesentlich.

Gewünscht sind bei der Definition zunächst Informationen über den Fehlergrund, den Fehlerort, die Auftragsnummer, die Schussnummer bzw. Losnummer, sowie das Messinstrument bzw. die Personalnummer der die Einschätzung vornehmenden Person.

In praktisch allen Fertigungsbetrieben werden Fehler in der Fehlersammelkarte erfasst. Dies geschieht entweder durch Strichlisten auf Papier oder durch Eingabe in einen Rechner oder ein BDE-Gerät oder direkt in die Maschinensteuerung.

Der Unterschied zu der üblichen Fehlersammelkarte ist hierbei der Bezug zur Schussnummer bzw. zur Losnummer. Falls die Fehler an mehreren Orten des Teils auftreten können, ist eine zusätzliche Erfassung des Fehlerorts günstig.

Das Messen erfolgt sodann während des Abmusterungsprozesses und des Herstellungsprozesses. Der vollständige Satz aus Messwerten der Fertigungsmaschine und dazugehörigen Parametern, und der Messkurven aus den Messungen im Werkzeug wird im Prozessrechner zum Zwecke der Analyse mit Speicherung der Schussnummer bzw. Losnummer abgespeichert. Dies ist möglich, denn wir haben die Rückverfolgbarkeit mit Tags vorausgesetzt.

Bei üblichen Fertigungsverfahren, wie etwa dem Spritzgießen, kann es mitunter mehr als einhundert verschiedene Prozesswerte geben, also ist der Raum der Prozesswerte hochdimensional. Eine Prozessdatenkurve kann sogar die Dimensionalität deutlich erhöhen, denn eine Kurve kann aus Tausenden von Punkten bestehen. Für das Umformen ist es typisch, dass ein zeitlicher Versatz einer Prozessdaten-Kurve sich nicht auf die Qualität auswirkt, die einer Prozessdatenkurve zugrunde liegenden Werte müssen in diesem Fall also zeitlich normiert werden.

Ausschuss entsteht durch eine Variation des Prozesses. Ist die Fertigungsmaschine eine Urformmaschine, so sind die möglichen Prozesswerte nur die Prozesswerte der Urformmaschine. Bei einer Fertigung mit mehreren Arbeitschritten sind alle Prozesswerte zu beachten, die den Ausschuss verursacht haben können.

Aufgrund der Definition und der Messung liegt nunmehr ein Zusammenhang zwischen attributiven Merkmalen (Fehlergrund und ggf. Fehlerort) und der Schussnummer bzw. der Losnummer vor. Im Fall, dass eine Zuordnung zur Schussnummer möglich ist, kann das jeweilige Gutteil bzw. Ausschussteil direkt identifiziert werden.

Im folgenden wird die folgende Notation verwendet werden:

$i$     Schussnummer bzw. Losnummer
$y_i$     Vektor der Prozesswerte
$Y$     Raum der möglichen Prozesswerte
$X$     Raum der Einstelldaten

Wir wollen nun bestimmen, welche Prozesswerte welchen Ausschuss verursachen.

Dazu müssen wir Bereiche $A \subset Y$ und $A_j \subset Y$ der Prozessdaten bestimmen, so dass für Prozessvektoren $y$ genau dann Ausschuss auftritt, wenn $y \in A$ und genau dann Ausschussgrund $j$ auftritt, wenn $y \in A_j$.

Es erweist sich als vorteilhaft, das Problem in der Sprache der Funktionen zu beschreiben.

Im folgenden wird mit

Z die Menge mit den Zahlen 0 und 1, d h. {0,1} bezeichnet. Es werden nun die Funktionen

$f_j : Y \rightarrow Z$

gesucht, wobei

$f_j(Y_i) = 1$

falls Schuss i das Attribut $_j$ besitzt, also $y_i \in A_j$

$f_j(y_i) = 0$

falls dies nicht zutrifft, also $y_i \notin A_j$.

Die Funktion

$f : Y \rightarrow Z$

soll die Gutteile im Raum der möglichen Prozesswerte von den Ausschussteilen trennen.

Als Hilfsmittel stehen hierbei Punkte $(y_i, z_i)$ zur Verfügung, die angeben, ob bei Schuss i der Ausschussgrund j aufgetreten ist.

Zum Auffinden einer geeigneten Funktion auf der Basis gemessener Datenbestände $D = ((y_1, z_1)"...(y_n, z_n),...(y_n, z_n))$ können verschiedene Verfahren verwendet werden. Diese Verfahren nennt man Klassifikationsverfahren.

Die Qualität dieser Verfahren kann man mit einer Loss-Funktion

$L : Y \times Z \times R \rightarrow R$

welche die Abweichung misst. Hierbei ist es die Aufgabe, eine Funktion

$f : Y \rightarrow Z$

mit minimalem Verlust zu finden.

Das gegenwärtig beste Klassifikationsverfahren ist SVM, oder Support Vector Machines. Dieses Klassifikationsverfahren konvergiert sehr schnell und die Konvergenz zur richtigen Zielfunktion wurde schon unter schwachen Voraussetzungen bewiesen.

Die Loss-Funktion wurde von den Zahlen $0,1 \in Z$ auf die ganzen reellen Zahlen verallgemeinert. Hierzu kann im Falle der Klassifikation z. B. die Hinge Loss-Funktion

$L(z,t) := \max(0, 1 - z * t)$

und die logistische Loss-Funktion

$L(z,t) := \ln(1 + \exp(-z * t))$

verwendet werden. Das Klassifikationsverfahren SVM mit diesen Loss-Funktionen hat schon einen breiten Einsatz bis hin zur automatischen Erkennung von Buchstaben und Ziffern z.B. bei dem automatischen Einlesen der Bankbelege.

Gute Klassifikationsverfahren bieten zudem eine Dämpfung, die das mit Messfehlern einhergehende Problem der Ungenauigkeit mindert. Bei allfällig auftretenden Fehlklassifizierungen durch Mensch und Maschine dürfen diese Messfehler bei der Bestimmung der Klassifikation nicht abgebildet werden, sondern sollen vielmehr ausgeblendet werden.

Dieses vorstehende Klassifikationsverfahren SVM kann, wie bereits erwähnt, eingesetzt werden, sofern einem Ausschussstück seine Schussnummer eindeutig zugeordnet werden kann. Liegt für ein Ausschussteil jedoch lediglich die Losnummer zu einem Los vor, in welchem das Ausschussteil anonym enthalten ist, so wird stattdessen ein Rasterfahndungsverfahren angewendet. Die Rasterfahndung ist viel ungenauer, als die vorstehende Klassifikationsmethode.

Das Rasterfahndungsverfahren verwendet die vier Schritte der Datenbereinigung, der Normalisierung, der Ausreißerdetektion und der Klassifikation.

Im ersten Schritt, der so genannten Datenbereinigung, werden diejenigen Prozesswerte aus der weiteren Untersuchung ausgeschlossen, die durch Fehler der Sensoren oder während eines Maschinenstillstandes entstanden sind.

Im zweiten Schritt, der Normalisierung, werden die Prozesswerte mittels der bekannten Z-Transformation in ihre Normalform gebracht. Die Z-Transformation ist eine lineare Transformation, die den Mittelwert auf 0 und die Standardabweichung auf 1 oder -1 verschiebt. Mittels dieser Transformation werden Prozesswerte also vergleichbar und Variationen, also mögliche Ausschussursachen, sichtbar.

Im dritten Schritt, der Ausreißerdetektion, werden starke Variationen automatisch herausgesucht. Das Ergebnis der Ausreißerdetektion ist eine Liste möglicher Ausschussteile und entsprechender Ausschussursachen. Unter diesen Möglichkeiten muss die richtige Ursache ermittelt werden.

Ausschuss entsteht durch das Zusammenwirken von Varianzen einzelner Prozesse. Sofern Prozesswerte lediglich geringe Varianzen zu Sollwerten aufweisen, kann davon ausgegangen werden, dass es sich bei diesen Teilen nicht um die Ausschussteile handelt. Es verbleiben lediglich diejenigen Teile als mögliche Ausschussteile, welche eine große Varianz von den Sollwerten besitzen. Anhand statistischer Verfahren wird nun geprüft, welche Arten der Abweichung mit früheren Ausschussteilen übereinstimmen. Hieraus wird der Prozessrechner eine ernste Hypothese ableiten können.

Mit dieser Hypothese werden sodann die Prozesswerte der Gutteile überprüft, ob hier gleichartige Variationen aufgetreten sind. Falls das nicht der Fall ist, so wird ein Zusammenhang zwischen den gefundenen Variationen der Prozesswerte und dem Ausschussgrund und den Ausschussort angenommen.

Dieses Verfahren kann vollautomatisch während einer Produktion ablaufen. Um Ausschuss zu minimieren, ist es wichtig, dass das Verfahren mit geringer Rechenzeit ohne menschliches Eingreifen zu Ergebnissen kommt.

Um selbsttätig das Ausschussteil und die Ausschussursache ermitteln zu können, muss ein Ausschusskegel der Dimension k definiert werden, wobei k die Anzahl der Prozesswerte des Werkstücks ist. Ein k-dimensionaler Ausschusskegel ist durch die Konjunktion von k unabhängigen Bedingungen bestimmt.

Ausschuss mit definiertem Grund und Ort kann mehrere Ursachen haben. Jede dieser Ursachen ist beschrieben durch eine Hornformel, also durch eine Konjunktion von k unabhängigen Bedingungen der erfassten Messwerte. Jede der Bedingungen hat die Form

$x(i) > G$

oder

$x(i) < G$ oder $x(i) = G$.

Ausschuss mit einer Ausschussursache kann man also in der Geometrie des Raums der Prozessvektoren beschreiben, es ist der k-dimensionale Kegel der Punkte im Raum der Messwerte, der die Konjunktion der k Bedingungen der Hornformel erfüllt.

In einem weiteren Schritt des Verfahrens werden mögliche Ausschusskegel bestimmt. Zu jedem Los gehört dabei die Menge der Prozessvektoren jedes Teils. Unter Prozessvektoren wird, wie bereits oben erwähnt, die geordnete Folge der erfassten Prozesswerte verstanden. Diese werden normiert und dadurch vergleichbar, mit dem Effekt, dass die Ausschussteile anschließend unter denjenigen normierten Prozessvektoren zu finden sind, bei denen absolut große Werte auftreten. Die betreffenden Prozessvektoren werden in kürzester Zeit vom Prozessrechner mittels mathematischer Verfahren ermittelt, hieraus kann wiederum ein Ausschusskegel bestimmt werden, in dem alle ermittelten Ausschussteile liegen und welche somit einen bestimmten Ausschussgrund an einem bestimmten Ausschussort kennzeichnen.

Auch das vorbeschriebene Rasterfahndungsverfahren ist ein Klassifikationsverfahren, mit den Ausschusskegeln werden Bereiche des Prozessdatenraums bestimmt, bei denen Ausschuss auftritt. Die dazu gehörende charakteristische Funktion ist eine Klassifikationsfunktion.

Mit Hilfe der Klassifikationsfunktion ist nun eine online Ausschuss-Diagnose möglich. An der Maschine werden online die Prozessdaten erfasst. Die Klassifikationsfunktion lässt sich in einigen Millisekunden auswerten und damit kann das Ausschussteil erkannt werden und automatisch aussortiert werden. Die automatische Klassifikationsfunktion kann gegebenenfalls mit einem Maschinenprüfplan kombiniert werden, der Prozesswerte in Grenzen überwacht.

Es reicht aber nicht aus, Ausschussteile auszusortieren, die Maschine soll so eingestellt werden, dass keine Ausschussteile entstehen. Bei der nachfolgenden Verbesserungsphase werden auf Konzepte zurückgegriffen, welches auch gemäß Six Sigma eingesetzt wird. Grundsätzlich wird hierbei versucht, die Prozesswerte so zu beeinflussen, dass die Ausschussrate auf $6\sigma$, also auf drei Ausschussteile je Million Werkstücke gesenkt wird. Dies versucht man unter anderem dadurch zu errechnen, dass man den erwarteten Prozesspunkt $\mu$ so wählt, dass $\mu$ einen Abstand von $6\sigma$ von allen Prozesspunkten hat, an denen Ausschuss entsteht.

Um einen solchen Punkt zu finden, müssen die Ausschussgründe analysiert werden. Vorraussetzung dabei ist, dass bei einer Produktion am Mittelwert die produzierten Teile ausschussfrei sind.

Die führenden Klassifikationsverfahren trennen die verschiedenen Klassen ( hier Ausschuss und Gut) durch eine differenzierbare Fläche, also wir können hier Tangentialebenen und den Abstand zum Erwartungswert bestimmen. Hat beispielsweise ein betrachteter, normalisierter, mittlerer Prozesswertevektor von der Abbruchkante einen Abstand von $2\sigma$, so soll dieser Abstand auf $6\sigma$ erhöht werden. Mit Abbruchkante bezeichnen wir einen Randpunkt des Ausschussbereichs.

Zunächst wird dazu im Prozessraum nach einem Punkt $\mu$ mit Abstand $6\sigma$ zur Abbruchkante gesucht; dazu gibt es eine Vielzahl von Methoden der klassischen mehrdimensionalen Geometrie. Eine einfache Methode verwendet die Tangentialebene der Randfläche des Ausschussbereichs und konstruiert dazu den Normalenvektor. Der Mittelwert soll von der Abbruchkante auf den Abstand $6\sigma$ verschoben werden, um gute Qualität sicherzustellen. Der gefundene Punkt kennzeichnet die Zielprozesswerte, welche sich anstelle des zu Ausschussteilen führenden Prozesswertevektors einstellen sollen.

Bei der Berechnung ist zu beachten, dass ein Ausschussgrund mehrere Ursachen haben kann; das bedeutet, dass es mehrere nicht zusammenhängende Bereiche des Prozessraums geben kann, die den gleichen Ausschussgrund verursachen.

Wenn es nicht möglich ist, einen Abstand von $6\sigma$ zur einem Gebiet, bei dem Ausschuss entsteht, herzustellen, so ist entweder mit einer geringeren Qualität vorlieb zu nehmen, oder das Werkzeug oder das Produkt zu korrigieren. Das Berechnungsverfahren such in diesem Fall einen Punkt mit größt möglichen Abstand zu den Prozesswerten, die Ausschuss verursachen.

Es gibt zwei Alternativen zu dieser Verbesserungs-Berechnung

Die Zykluszeit des Herstellungsprozesses kann als zusätzliches Ziel hinzugezogen werden. Eine solche Berechnung ist bei ausreichend Daten möglich, denn es handelt sich um konvexe Optimierung. Im allgemeinen sind aber nicht ausreichend Daten zur Verfügung.

Es ist möglich, die Verbesserungsphase mit der folgenden Vorhersagephase zusammen durchzuführen oder zu vertauschen. Man wandelt dabei die Entfernung zur Randfläche und ggf. Zykluszeiteinsparungen in Zielgrößen zur Auswahl eines Einstelldatensatzes um. Eine solche Vertauschung entspricht zwar der Ingenieursdenkweise, widerspricht aber allem, was wir über gute Berechnungsverfahren in der Theorie statistischen Lernens wissen.

Ausgehend von den so ermittelten Zielprozesswerten wird abschließend eine Ermittlung der erforderlichen Einstelldaten vorgenommen.

Während der Messphase sind mehrere Einstelldatensätze gespeichert worden und zu jedem Einstelldatensatz $x_i$ mehrere Prozesswerte, zu denen wir Mittelwert und Standardabweichung bestimmt haben. Jedem Einstelldatensatz ordnen wir nun seinen Erwartungswert $y_i$ (d. h. seinen Mittelwert) und seine Standardabweichung zu.

Aus den gemessenen Einstelldaten und Prozessdaten $(x_i, y_i)$ wird nun möglichst genau eine Funktion $f : X \rightarrow Y$ bestimmt,
welche die gemessenen Werte möglichst gut annähert und gedämpft ist, um die Messfehler möglichst weitgehend auszugleichen.

Bevor ein solches Vorhersage-Verfahren genutzt wird, sollte geprüft werden, ob die Anzahl der Daten hierfür auch ausreichend ist. Bei einer hohen Anzahl von Dimensionen und kleinen Datenbeständen empfiehlt es sich, zunächst ein Verfahren zur Dimensionsreduktion zu verwenden.

Danach wird ein Vorhersage-Verfahren verwendet, um den Zusammenhang zwischen Einstelldaten und Prozessdaten zu errechnen.

Schließlich wird mit Hilfe der errechneten Funktion f der gesuchte Einstelldatensatz bestimmt. Dies geschieht mit einem lokalen Verfahren.

Prof. Ingo Steinwart (Los Alamos) hat 2007 bewiesen, dass die einzige gültige Lossfunktion in einer aus Erwartungswerten entstandenen Fragestellung der euklidsche Abstand ist. Die mathematische Aufgabenstellung ist es nun, eine optimale Funktion $f : X \rightarrow Y$ zu finden, die

$$\sum || f(x_i) - y_i ||^2 + \lambda ||f||^2$$

minimiert. Der erste Summand misst den Abstand der Bildpunkte der Einstelldatensätze zu den gemessenen Mittelwerten der Prozessdaten, der zweite Summand ist ein Dämpfungsterm, um eine zu große Reaktion auf Messfehler zu verhindern. Anstelle der Ridge Dämpfung $\lambda ||f||^2$ können eine Vielzahl anderer Dämpfungsterme verwendet werden, z.B. das Lasso, Teilmengenselektion oder das elastische Netz. Anstelle des euklidschen Abstands kann man auch andere Abstandsmessungen verwenden, aber mit schlechteren Ergebnissen.

Die Bestimmung einer optimalen Funktion $f : X \rightarrow Y$, die eine Summe aus Abstand und Dämpfung minimiert, nennt man Prediction oder Vorhersage.

Es gibt mehrere Vorhersageverfahren, die das obengenannte Optimierungsproblem lösen, das beste Verfahren ist SVM (Support Vector Machines). Für SVM ist eine gleichmäßige Konvergenz zu einer Optimalfunktion $f : X \rightarrow Y$ bewiesen.

Mit den so genannten Gaußschen Kernen gelingt zudem eine explizite Darstellung einer Lösung auf Basis des gemessenen Datenbestandes $D = \{ (x_1, y_1) , ... , (x_n, y_n) \}$. Die gefundene Lösung legt sich wie ein Gaußscher Schlauch um eine Teilmenge von D; diese Teilmenge nennt man Support Vektoren.

Das hier gefundene mathematische Ergebnis deckt sich perfekt mit den Erfahrungen der Ingenieure :

Der Zusammenhang zwischen Einstelldaten und Prozessdaten weist eine Gaußsche Ungenauigkeit auf.

Der allgemeine Konvergenzbeweis des SVM-Verfahrens (Support Vector Machines) stellt dabei sicher, dass automatisch eine fehlerfreie Einstellung der Fertigungsmaschine errechnet werden kann, sofern nur ein ausreichend großer Satz an Messdaten zu Verfügung steht.

Ziel ist es nun, die Maschine so einzustellen, das der Mittelpunkt der Prozesswerte genau der mit dem Verbesserungsverfahren nach Six Sigma bestimmte Punkt $\mu$ ist.

Die Prozesswerte können zur Vereinfachung in normalisierter Form betrachtet werden, also durch eine Z-Transformation jedes Prozesswertes mit

$$Z = (w - \mu) / \sigma.$$

Die Z-Transformation bildet $\mu$ auf 0 ab.

Es wird folglich ein Punkt $x_0$ gesucht, für den

$$f(x_0) = 0$$

gilt. Ein schnell konvergierendes Verfahren ist der Robbins-Munro-Algorithmus. Die Idee dieses Verfahrens stammt von der Bestimmung des so genannten "Maximum likelyhood"-Mittelwerts

$$\mu ML_{(N)} = 1/N \cdot \Sigma x_n$$

$$= 1/N \cdot x_N + (N-1)/N \cdot \mu ML_{(N-1)}$$

$$= \mu ML_{(N-1)} + 1/N \cdot (x_N - \mu ML_{(N-1)})$$

Nach N-1 Beobachtungen wird demnach $\mu$ abgeschätzt durch $\mu$ ML (N-1).

Wird nunmehr der N-te Datenpunkt beobachtet, so kann eine neue Schätzung $\mu ML$ (N) dadurch erhalten werden, dass die alte Abschätzung $\mu ML(N-1)$ um einen schmalen Wert proportional zu 1/N in die Richtung des Fehlersignals

$(x(N) - \mu ML (N-1))$

bewegt wird. Wenn N größer wird, so nimmt der Anteil späterer Datenpunkte ab.

Der Robbins-Munro Algorithmus schätzt den gesuchten Wert $x_0$ ab durch

$$x_N = x_{N-1} - a_{N-1} \cdot z(x_{N-1})$$

wobei die gewählten Koeffizienten folgende Voraussetzungen erfüllen müssen :

$$\lim a_N = 0$$

$$\Sigma a_N = \text{unendlich}$$

$$\Sigma a_N^2 \quad \text{konvergiert.}$$

Die ersten beiden Bedingungen sichern, dass das Verfahren konvergiert, die dritte Bedingung sichert, dass das Rauschen der Messwerte das Ergebnis nicht stört.

Das vorstehende Verfahren nennen wir automatisiertes Six Sigma Verfahren, oder kurz A6$\sigma$-Verfahren.

Die jetzt offene Fragestellung ist, für welche Fertigungsmaschinen lässt sich das A6$\sigma$-Verfahren anwenden. Am besten versteht man die Fragestellung, wenn man zuerst 3 Maschinen benennt, für die das Verfahren nicht anwendbar ist.

Wenn eine Maschine Apfelsaft presst und verwendet schlechte Äpfel, so kann das Ergebnis Ausschuss sein, ohne dass dafür Variationen des Prozesses verantwortlich sind. An diesem Beispiel lernt man, dass man das verwendete Material beachten muss und sich als erstes auf Urformmaschinen konzentrieren sollte.

Beim Glockenguss wird für jede Glocke eine neue Form erstellt und danach zerstört. Wir finden hier also keine Datenmenge D, bei der wir automatisch etwas über den Prozess lernen können. An diesem Beispiel lernt man, dass das Verfahren nur angewendet werden kann, wenn die Maschine gleichartige Produkte in hoher Zahl herstellt.

An der Endmontagelinie eines Automobils entstehen so viel Daten, dass der Prozessraum viele tausend Dimensionen hat. Für unser SVM-Verfahren gilt der "Fluch der Dimensionalität", bei zu vielen Dimensionen kann man nicht mehr klassifizieren oder vorhersagen. Das Toyota Problem mit den Gaspedalen wäre nicht zu lösen gewesen. Hätte aber jedes Pedal eine Seriennummer gehabt und wären die Prozessdaten einschließlich Werkzeuginnendruckkurve zu dem Pedal verfügbar gewesen und hätte man sich auf Pedale beschränkt, so wäre das Problem früh lösbar gewesen. An diesem Beispiel lernt man, dass die Rückverfolgbarkeit und Dimensionsbeschränkung eine entscheidende Rolle spielt.

Wir können jetzt allgemein die Voraussetzungen benennen, unter denen das A6$\sigma$-Verfahren zur Klassifikation und Vorhersage konvertiert :

A6$\sigma$1 : Merkmalsvollständigkeit

Zu jedem definierten Ausschussgrund eines produzierten Teils oder produzierten Baugruppe können Variationen des Prozesses oder Variationen von zugelieferten Materialien festgestellt werden.

A6$\sigma$2 : Rückverfolgbarkeit

Die Fertigungsmaschine produziert in ausreichender Menge identifizierbare Teile bzw. Baugruppen, oder identifizierbare Lose. Die Eingangslose können automatisch erkannt werden.

A6$\sigma$3 : Dimensionsbeschränkung

Die Anzahl der einen Fehler verursachenden Faktoren oder Dimensionen ist wesentlich kleiner, als die Anzahl der gemessenen Teile.

Die Forderung der Dimensionsbeschränkung reduziert die Anwendung des Verfahrens auf lokale Probleme. Es stellt sich nun die Frage, sind die Forderungen der Merkmalsvollständigkeit und der Rückverfolgbarkeit bei üblichen Maschinen, wie z. B. Spritzgießmaschinen zur Herstellung technischer Teile, heute schon erfüllt? Die Antwort ist, im Prinzip ja, aber so wie die Betriebe heute arbeiten, sind die anfallenden Daten noch nicht nutzbar.

- moderne Werkzeuge von Spritzgießmaschinen haben Werkzeuginnendrucksensoren, aber die Daten werden nicht gespeichert.
- Moderne Spritzereien haben Materialversorgungs-Anlagen, aber deren Daten sind nicht abgeglichen mit der Spritzgießmaschine.
- Moderne Spritzgießmaschinen können die Prozessdaten mit einer Hostschnittstelle bereitstellen, aber die Daten sind oft wegen eines Auftragsstarts zum falschen Zeitpunkt unbrauchbar.
- Ausschussgründe werden erfasst, aber ohne Bezug zu Los- und Schussnummer.
- Der identifizierende Tag des Transportloses wird meist im Lager manuell erstellt und ist manchmal falsch und hat keinen Bezug zu den Prozessdaten.

Im folgenden beschreiben wir ein Verfahren zum Betrieb von Urformmaschinen, Bearbeitungs- und Montagemaschinen, die alle benötigten Daten für das Verfahren bereitstellen.

DIN 8580 bezeichnet alle Fertigungsverfahren, in denen aus formlosen Stoff ein Werkstück hergestellt wird, als Urformen. Für die wesentlichen Urformverfahren , wie z.B. Kunststoff- und Metallgießen, gilt, dass ein hergestelltes Teil eindeutig durch Werkzeug und Material bestimmt ist; die hierzu gehörenden Maschinen mit Steuerung und Hostschnittstelle nennen wir Urformmaschinen.

Es gibt wenige Ausnahmen, die wir ausschließen, wie Glockenguss, der individuell durch die Zerstörung des Werkzeugs ist, sowie Sprühkompaktieren, wobei das Verfahren beachtet werden muss.

Mit Werkzeug bezeichnen wir die Gesamtheit aller das Material formenden Teile. Insbesondere fassen wir das zweiteilige Werkzeug der Profilextrusion zu einem Gesamtwerkzeug zusammen.

Bei einer solchen Urformmaschine kann es sich beispielsweise um eine Spritzgießmaschine handeln, der von einer Materialzuführung das erforderliche Material zur Herstellung eines Werkstücks zugeführt wird und die dann mithilfe des Werkzeugs aus dem Material in einer vorgegebenen Farbe ein Werkstück herstellt. Dieses Werkstück, das als solches auch eine weiter zu bearbeitende Urform darstellen kann, ist durch die Farbe, das verwendete Material und das formende Werkzeug eindeutig definiert. Unabhängig davon, welcher Auftrag von der Auftragsplanung bereitgestellt wird, ist der Artikel somit durch diese drei Faktoren vorgegeben, so dass die Erfindung die grundsätzliche Erkenntnis verwirklicht, dass ausgehend von den tatsächlich vorhandenen Faktoren ein geeigneter Auftrag auszuwählen ist. Zum Begriff des Auftrags im Sinne der Erfindung ist das Folgende auszuführen.

Unterschiedliche Fertigungen haben unterschiedliche Auftragsarten. Im Sinne dieses Textes definiert der Auftrag die zur betroffen Fertigungsart gehörende Auftragsart. Die gebräuchlichsten vier Auftragsarten sind die anonyme Fertigung, Kanban, die Serienfertigung und die Kundenauftragsfertigung.

In der anonymen Fertigung werden mehrere Bedarfe zu Fertigungsaufträgen zusammengefasst. Fertigungsaufträge können auch aus Losgrößenstrategien entstehen. In der anonymen Fertigung gibt es zu jedem zu fertigenden Artikel einen eiligen Fertigungsauftrag.

Kanban-Aufträge sind Fertigungsaufträge mit Losnummern. Die Sequenz der Losnummer gibt die Reihenfolge der Abarbeitung vor.

In der Serienfertigung arbeitet die Produktion nicht mit Aufträgen und meldet artikelbezogen zurück. Die Arbeitsvorbereitung verwendet Planaufträge zur Planung. Die Planaufträge können in der Wechselfließsteuerung wie normale Fertigungsaufträge verwendet werden.

Um Rüsten zu sparen, werden Kundenaufträge mit gleichem Werkzeug und Material hintereinander gefertigt in einer vorgegebenen Sequenz.

Um nunmehr zunächst einen geeigneten Auftrag auszuwählen, beginnt erfindungsgemäß das Herstellungsverfahren eines Werkstücks mit der Auswahl eines Werkzeugs sowie der Anlieferung des Materials in einer bestimmten Zusammensetzung und Farbe, in einer Weise, dass die Maschinensteuerung sowohl das Werkzeug als auch die Zusammensetzung des Materials und dessen Farbe vorab ermitteln kann. Diese tatsächlich vorhandenen Faktoren werden in einer Anfrage an den Prozessrechner, auf dem die Auftragsplanung läuft, zusammengefasst und an diesen gesendet. Der Prozessrechner wird nunmehr prüfen, welches Werkstück mit den vorhandenen Faktoren hergestellt werden kann und anhand dessen weiterhin prüfen, welcher Auftrag aus der Auftragsplanung hierfür in Frage kommt. Regelmäßig wird sich der Einrichter, der das Werkzeug an der Urformmaschine montiert, an den Vorgaben der Auftragsplanung orientieren, jedoch wird auf diese Weise ein möglicher Fehler des Einrichters, insbesondere bei der Auswahl des Werkzeugs, nicht darauf hinauslaufen, dass eine weitere Rüstzeit bis zum Beginn des Auftrags abzuwarten ist, sondern vielmehr, dass ein anderer Auftrag entsprechend der tatsächlichen Einrichtung vorgezogen wird, um die Rüstzeit für eine weitere Umrüstung zu sparen, jedoch gleichzeitig kein falsches Produkt zu produzieren und fehlerhaft der Lagerverwaltung zuzuführen.

Vielmehr wird der Prozessrechner den bestgeeigneten Auftrag auswählen und diesen der Maschinensteuerung der Urformmaschine bereitstellen, so dass diese anhand der in dem Auftrag enthaltenen Einstelldaten den fraglichen Auftrag korrekt abwickeln kann. Somit ist gewährleistet, dass eine Optimierung der Abläufe im Hinblick auf die Rüstzeiten und gleichzeitig eine wirkungsvolle Vermeidung von Fehlern im Bereich der nicht werthaltigen Schritte der Auftragsanmeldung und Auftragsabmeldung stattfindet.

Ausgeführt ist ein derartiges Verfahren vorliegend für Urformmaschinen, jedoch lässt sich ein derartiges Vorgehen mit einigen Anpassungen auch auf andere Bereiche übertragen, insbesondere auch auf Bearbeitungsmaschinen und Montagemaschinen.

Die Ermittlung der erforderlichen Indikatoren für die drei Faktoren Werkzeug, Materialzusammensetzung und Materialfarbe kann direkt von der Urformmaschine durchgeführt werden, jedoch kann die Ermittlung dieser Faktoren auch über eine einfache Mitteilung von anderen Maschinen erfolgen. So kann beispielsweise eine Materialzuführung über eine Dosieranlage erfolgen, die ihrerseits Farbe und Materialzusammensetzung ermittelt und an die Maschinensteuerung weiterleitet. Mit Dosieranlage bezeichnen wir hierbei alle Aggregate, die zur Versorgung mit Material benötigt werden. Dabei kann unter Umständen mehr als eine Steuerung betroffen sein. Bei dem Spritzgießen und der Extrusion ist die Steuerung der so genannten "blending line" eine andere als die Steuerung der "Storage line" oder "conveying line". Alle Linien werden begrifflich zu einer Anlage zusammengefasst.

Zur Erfassung der erforderlichen Indikatoren kann bei einer manuellen Materialzuführung ein Einlesen eines Tags, beispielsweise eines Barcodes, erfolgen, anhand dessen die Dosieranlage die erforderlichen Informationen ermitteln kann. Bei einer automatischen Materialzuführung, die zunehmend üblich wird, können die Einstelldaten dieser automatischen Materialzuführung an die Dosieranlage weitergeleitet werden, welche die erforderlichen Indikatoren dann hieraus ermitteln kann. Die Dosieranlage vermischt die ihr zugeführten Materialien, insbesondere die Farbe, das Regranulat und den Masterbatch, und stellt hieraus den zu verwendenden Kunststoff her. Dieser wird der Urformmaschine, beispielsweise einer Spritzgießmaschine, bereitgestellt, die den Kunststoff aufbereitet und mithilfe des Werkzeugs das Werkstück formt.

Der dritte Indikator, der zur eindeutigen Bestimmung eines herzustellenden Werkstücks benötigt wird, ist ein Hinweis auf das verwendete Werkzeug. Dieser Werkzeug-Indikator kann beispielsweise durch das Auslesen eines mit dem Werkzeug verbundenen Tags, beispielsweise eines Barcodes oder eines RFID-Tags, realisiert werden, denkbar ist jedoch auch jede andere Identifikationsmöglichkeit, mit der das Werkzeug identifiziert werden kann. Hierbei ist nicht unbedingt eine eineindeutige Identifizierung erforderlich, vielmehr genügt grundsätzlich die Art des Werkzeugs. Bei einer ein-eindeutigen Kennung des Werkzeugs können eventuelle Eigenheiten dieses Werkzeugs jedoch ebenfalls berücksichtigt werden, so dass dies sinnvoll erscheint. Erfordert beispielsweise ein Werkzeug das Einspritzen des Kunststoffs mit einem höheren Druck als ein anderes Werkzeug zur Herstellung des gleichen Werkstücks, so kann dies bei einer ein-eindeutigen Zuordnung der Kennung mit berücksichtigt werden und verbessert nochmals das Ergebnis des Herstellungsprozesses.

Der Werkzeug-Indikator wird also durch ein Verfahren ermittelt, bei dem die Urformmaschine das Werkzeug erkennt, oder auf Plausibilität überprüft. Der einfachste Fall ist die Werkzeugerkennung. Aus Kostengründen wird meist darauf verzichtet. Die Prüfung eines Werkzeugs läuft in folgenden Schritten ab: Der Einrichter lädt einen Einstelldatensatz in die Steuerung der Urformmaschine. In dem Einstelldatensatz sind eine Vielzahl von Informationen enthalten, die das Werkzeug betreffen. Die Urformmaschine prüft nun, ob die Einstelldaten und die von Werkzeug erfassten Daten zusammenpassen. Auf diese Art und Weise ist die Werkzeuginformation in der Urformmaschine fehlerfrei.

Üblicherweise teilen sich Herstellungsprozesse in so genannte werthaltige Schritte und nicht werthaltige Schritte, wobei beispielsweise die Kundenauftragsannahme, das Spritzgießen bzw. Herstellen des Werkstücks und dessen Verpackung werthaltige Arbeitsschritte darstellen, wohingegen die Auftragsanmeldung und -abmeldung, die Artikelerkennung oder die Einlagerung nicht werthaltige Schritte darstellen, also Schritte, die nicht am Produkt direkt ablesbar sind und damit dessen Wert für den Kunden nicht direkt bestimmen. Infolgedessen hat die Erfahrung gezeigt, dass nicht werthaltige Schritte oft schlampig und daher fehlerhaft ausgeführt werden. Bei üblichen Urformmaschinen erfolgt beispielsweise die Umrüstung des Werkzeugs, die Auftragsanmeldung und Auftragsabmeldung etc. manuell, so dass hierbei eine Reihe von Fehlern auftreten kann. Derartige Fehler sind beispielsweise fehlende oder verspätete Auftragsanmeldung und Auftragsabmeldung, falsche manuelle Stückzahlbuchung oder auch die Fehlerkennung der tatsächlich produzierten Artikel.

Bei der Fehlbuchung von Artikeln läuft dies darauf hinaus, dass sich im Lager zunehmend falsch gebuchte oder falsch hergestellte Artikel ansammeln, die zwar Lagerkosten verursachen, aber auf Grund ihrer Fehlbuchung für die Disposition nicht verfügbar sind. Zudem erfordert dies eine neue Produktion der hierdurch fehlenden Artikel, so dass nochmals Rüstkosten, Materialkosten und Arbeitszeit hinzutreten.

Es kann somit festgestellt werden, dass es ein großes Anliegen der Hersteller ist, die Fehleranfälligkeit, insbesondere bei den nicht werthaltigen Schritten, dadurch zu senken, dass diese Schritte in hohem Grade automatisiert werden.

Im Rahmen eines Transports werden die Werkstücke zu Losen zusammengefasst; für die Rückverfolgbarkeit ist es nötig, dass entweder die Werkstücke oder Lose identifiziert werden können.

Zu jedem Los werden mit einigem Vorteil Prozessdaten, die bei der Herstellung erfasst werden, gespeichert, wobei eine das Los eindeutig identifizierende Loskennung verwendet wird. Auf diese Weise werden die bei der Produktion anfallenden Prozessdaten dem jeweiligen Los virtuell anverbunden, so dass bei späteren Fehlern oder Beanstandungen Rückschlüsse auf die Ursachen für derartige Beanstandungen gezogen werden können.

Um auch menschliche Fehler bei der Kennzeichnung der einzelnen Lose auszuschließen, wird eine Loskennung direkt im Prozessrechner oder auch in der Maschinensteuerung erstellt und direkt an ein Mittel zur Herstellung eines Tags, beispielsweise wiederum eines RFID-Tags oder eines Barcodes, weitergeleitet, so dass ein entsprechendes Tag für jedes Los erstellt werden kann. Nach der Herstellung des entsprechenden Tags wird das der darauf gespeicherten Loskennung entsprechende Los mit dem fraglichen Tag verbunden, so dass idealerweise ein Eingriff in den Herstellungsprozess nicht erfolgt, bevor eine Kennzeichnung des Loses mit der Loskennung erfolgt ist.

Um die Verbringung des jeweiligen Loses von der Urformmaschine bis hin zum Anbringen des Tags ebenfalls möglichst ohne Eingriffe von außen zu gestalten, erfolgt der Transport beispielsweise über einen Robot; alternativ oder ergänzend kann auch ein Transportband verwendet werden. Gegebenenfalls können die Werkstücke auch auf diese Weise einer Endmontage zugeführt werden, sowie eine losweise Verpackung der Werkstücke erfolgen. Anhand des verwendeten Tags, der dem Los nunmehr abschließend anverbunden ist, kann eine automatische Lagerverwaltung mit den Daten des jeweiligen Loses dadurch gespeist werden, dass beim Eingang in das Lager das die Loskennung enthaltende Tag als Lagereingang eingelesen wird.

Ein weiteres, im Rahmen der Erfindung gelöstes Problem betrifft den Transport der Werkstücke. In der Industrie ist eine Mehrmaschinenbedienung üblich, einem Maschinenbediener wird dabei eine Mehrzahl von Maschinen zugeordnet. Mehr als die Hälfte der Zeit läuft der Maschinenbediener durch die Halle und prüft, ob das Transportgebinde, also beispielsweise ein Wagen oder eine Kiste, voll ist. Mehr als die Hälfte des Aufwandes ist also Verschwendung.

Im Rahmen der vorliegenden Erfindung ist der Auftragsstart dem Prozessrechner bekannt. Danach wird beispielsweise das Werkstück vom Robot auf ein Förderband gelegt. Wenn das Förderband mit konstanter Geschwindigkeit läuft, wie etwa bei Spritzgießmaschinen üblich, so kann mit der konstanten Geschwindigkeit die Anzahl der Teile auf dem Band errechnet werden. Falls das Band nicht mit konstanter Geschwindigkeit läuft, wie es üblicherweise bei Extrudern der Fall ist, so muss zusätzlich an einem Rad des Förderbandes dessen Geschwindigkeit erfasst oder alternativ mit einer Lichtschranke gearbeitet werden.

Beim ersten Transportgebinde ergibt sich die darin enthaltene Menge an Werkstücken aus der produzierten Menge, abzüglich der Menge auf dem Band. Die Sollmenge der Teile im Transportgebinde ist dem Prozessrechner oder auch einem eigens hierfür vorgesehenen Transportrechner eines Gebindeverteilers bekannt, ebenso die Fertigungsgeschwindigkeit der Spritzgießmaschine. Also kann der Rechner vorhersagen, wann die Sollmenge im Transportgebinde erreicht ist. Der Prozessrechner kennt zu jedem Zeitpunkt die Anzahl der Werkstücke im Behälter.

Nun kann auf zwei alternative Arten weiter verfahren werden. Entweder tauscht der Maschinenbediener die Transportgebinde und bestätigt dies an einer Meldeeinheit. Dort wird dann ein Tag mit der richtigen Menge hergestellt. Der Maschinenbediener bringt das Tag auf. Alternativ tauscht der Maschinenbediener den vollen Behälter mit einem leeren und wiegt ihn mittels einer Waage. Die Waage errechnet aus dem Gewicht die Stückzahl im Behälter. Die Stückzahl der Waage wird vom Prozessrechner übernommen. Der Prozessrechner errechnet daraufhin die Menge im neuen Behälter.

Der Transport der Behälter soll geplant werden, um das unnötige Herumlaufen des Maschinenbedieners einzusparen. Arbeitsgänge dieses Typs erlauben eine automatische Optimalplanung. Damit kann der Prozessrechner anzeigen, wann welcher Maschinenbediener an welcher Maschine Transportgebinde abholen soll. Alternativ wird nur angezeigt, wo und wann ein Transportgebinde abgeholt werden muss.

Bei schweren Teilen kann der Maschinenbediener die Teile nur verpacken, aber nicht transportieren. Hier ist ein zusätzlicher Transport durch einen Unstetigförderer nötig, im allgemeinen ein Flurfahrzeug zum Transport einer Palette oder eines Gestells. Auch dies kann nach gleichem Schema automatisiert werden.

Zur Vollständigkeit sei erwähnt, dass der Prozessrechner nicht nur die Informationen hat, wann Material geholt werden muss, der Prozessrechner weiß auch, wo das Material hingebracht werden muss.

Wenn eine Urformmaschine mit dem vorstehenden Verfahren betrieben wird, so entstehen zweifellos rückverfolgbare Daten.

Die Information, dass es sich bei einem Werkstück um ein Ausschussteil handelt, kann jedoch auch im Einzelfall nicht aus den Prozessdaten der Maschinensteuerung direkt ersichtlich sein, so dass dann zusätzliche Messungen direkt am Werkzeug nötig werden. Werkzeuginnendrucksensoren und Werkzeuginnentemperatursensoren werden zum Beispiel von Fa. Kistler angeboten und ein großer Anteil der Werkzeuge zur Herstellung technischer Teile ist mit Kistler Werkzeuginnendrucksensoren ausgestattet. Bei den meisten technischen Teilen reichen die Werkzeuginnendruckkurven alleine aus, um gute Teile und Ausschussteile zu unterscheiden. Die Werte von Werkzeuginnendruckkurven können wie normale Prozesswerte behandelt werden, wenn man die Kurven vorher zeitlich zentriert. Zur Analyse einer solchen Kurve eignet sich besonders kaskadierendes SVM, eine Variante von SVM für hohe Datenmengen.

Das vorbeschriebene Verfahren zur automatischen Auftragserkennung und Tag-Erzeugung nennen wir Wechselfließsteuerung. Vor Beschreibung der Wechselfließsteuerung haben wir als Beispiel dargestellt, dass eine normal betriebene Spritzgießmaschine nicht den Anforderungen $A6\sigma1$ : Merkmalsvollständigkeit und $A6\sigma2$ : Rückverfolgbarkeit genügt. Wird eine Spritzgießmaschine jedoch mit der Wechselfließsteuerung betrieben, so sind die Anforderungen der Merkmalsvollständigkeit und der Rückverfolgbarkeit erfüllt.

Das $A6\sigma$-Verfahren und die Wechselfließsteuerung kann auch auf Gesamtsysteme aus Urformmaschinen, Bearbeitungsmaschinen und Montagemaschinen angewendet werden, wobei ein Materialfluss von der Urformmaschine zu möglicherweise mehreren Bearbeitungsmaschinen erfolgt und von dort zu Montagemaschinen. Unter Bearbeitungsmaschinen verstehen wir Maschinen mit Steuerung mit Hostschnittstelle und Tag-Lesern für ein- und ausgehende Teile oder Lose, die bearbeitende Tätigkeiten im Sinne von DIN 8580 Punkt 2-4 ausführt. Dabei wird vorausgesetzt, dass die Urformmaschine mit Tag gekennzeichnete Lose bereitstellt. Von den Karosseriebaulinien der Automobilindustrie ist bekannt, dass die Bearbeitungsmaschinen dieser Linien so betrieben werden, dass das Tag der zu bearbeitenden Karosserie gelesen wird. Danach kann die Bearbeitungsmaschine mit den notwendigen Einstelldaten versorgt werden. Artikel und Auftrag können automatisch bestimmt werden. Voraussetzung ist nur, dass ein stabiler Tag am Eingangslos vorhanden ist. Genau das wird von der Urformmaschine bereitgestellt. Damit ist in Gesamtsystemen aus Urformmaschinen und Bearbeitungsmaschinen eine automatische Auftragsbestimmung möglich.

Ausschuss kann an einer Bearbeitungsmaschine auf 3 Arten entstehen :

- Variationen des Bearbeitungsprozesses ohne Mängel des bearbeiteten Teils. Hier wird bei der Klassifikation der Prozessraum der Bearbeitungsmaschine zugrunde gelegt.
- Fehler des bearbeitenden Teils. Hier wird der Fehler auf der vorhergehenden Prozess zurückverfolgt und dort klassifiziert.
- Ein Zusammenwirken von Variationen der Herstellung des Eingangsteils und des Bearbeitens. In diesem Fall muss die Klassifikation des Fehlers im Produktraum der Prozessdatenräume und der Bearbeitungsmaschine erfolgen; hier ist eine erfolgreiche Klassifikation nur möglich, wenn der Fehler öfters auftritt.

Das $A6\sigma$-Verfahren kann an Montage-Maschinen angewendet werden, wenn sie die Bedingungen $A6\sigma1$- $A6\sigma3$ erfüllen. Wenn die Montagemaschine eine Hostschnittelle besitzt, sowie Tag-Leser für eingehendes und ausgehendes Material und das eingehende Material von Fertigungsmaschinen mit $A6\sigma$-Verfahren hergestellt wurde, so ist das $A6\sigma$-Verfahren auch an der Montagemaschine anwendbar. Dies gilt insbesondere für Montagemaschinen, die von Urform- und Bearbeitungsmaschinen beliefert werden.

**BEZUGSZEICHENLISTE**

| | |
|---|---|
| 11 | Sollwert |
| 12 | Unterer Grenzwert |
| 13 | Oberer Grenzwert |
| 14 | Ausschusskegel |
| 15 | Abbruchkante |
| t | Zeit |
| $x_i$ | Einstelldaten |
| $y_i$ | Prozesswerte |
| 0 | Raumbereich mit Ausschussteilen |
| 1 | Raumbereich mit Gutteilen |
| 2s | Abstand $2\sigma$ |
| 6s | Abstand $6\sigma$ |

**Patentansprüche**

1. Verfahren zum Betrieb einer Fertigungsmaschine in der rückverfolgbaren Wechselfließfertigung, in welcher die Transportlose oder die einzelnen Teile oder Baugruppen elektronisch identifizierbar sind, und welcher ein Prozessrechner zugeordnet ist, der einer Maschinensteuerung Einstelldaten bereitstellt und Prozesswerte erfasst, wobei eine Einteilung in Gut und Ausschuss erfolgt, **dadurch gekennzeichnet, dass** einem Ausschussteil seine Schussnummer eindeutig zugeordnet wird und anhand der Einteilung in Gut und Ausschuss und der erfassten, jeweils einer Schussnummer zugeordneten Prozesswerte eine Klassifikation der zu Gutmengen führenden Prozesswerte und der zu Ausschussmengen führenden Prozesswerte vorgenommen wird, anhand der Klassifikation eine Bestimmung von Zielprozesswerten erfolgt und schließlich unter Verwendung eines Vorhersageverfahrens aus den Zielprozesswerten neue Einstelldaten errechnet werden; dabei können auch die beiden letzten Schritte gemeinsam erfolgen.

2. Verfahren gemäß Anspruch 1, **dadurch gekennzeichnet, dass** Ausschussgründe und gegebenenfalls Ausschussorte definiert werden.

3. Verfahren gemäß einem der Ansprüche 1 oder 2, **dadurch gekennzeichnet, dass** eine Zuordnung zwischen Ausschussteil und Fehler bzw. Ausschussgrund aufgrund einer selbsttätigen Messung oder aufgrund einer manuellen Eingabe erfolgt.

4. Verfahren gemäß einem der vorhergehenden Ansprüche, **dadurch gekennzeichnet, dass** der Prozessrechner zu jedem Werkstück unter Verwendung einer Schussnummer und/oder Losnummer sämtliche ermittelten Prozesswerte speichert.

5. Verfahren gemäß einem der vorhergehenden Ansprüche, **dadurch gekennzeichnet, dass** als Klassifikationsverfahren das SVM-Verfahren (Support Vector Machines) mit dem Hinge Loss oder dem logistischen Loss eingesetzt wird.

6. Verfahren gemäß einem der Ansprüche 1 bis 5, **dadurch gekennzeichnet, dass** ein Werkstück ein anonymer Bestandteil eines Loses ist, wobei eine Ausschusserkennung innerhalb eines Loses in vier Schritten abläuft, nämlich

   • Ausschluss derjenigen Prozesswerte aus der weiteren Untersuchung, die durch Fehler der Sensoren oder während eines Maschinenstillstandes entstanden sind,
   • Normalisierung, der Prozesswerte mittels der Z-Transformation,
   • Selbsttätiges Heraussuchen starker Variationen der Prozesswerte, und
   • Klassifikation durch Bestimmung möglicher Ausschusskegel anhand dieser stark abweichenden Prozesswerte, wonach alle innerhalb der Ausschusskegel liegenden Prozesswerte als zu Ausschussteilen gehörig angesehen werden.

7. Verfahren gemäß einem der vorhergehenden Ansprüche, **dadurch gekennzeichnet, dass** an der Fertigungsmaschine bei laufender Maschine Ausschuss erkannt werden kann, indem die Prozessdaten online erfasst werden und mit Hilfe der errechneten Klassifikationsfunktion bestimmt wird, ob es sich um Ausschussteile oder Gutteile handelt.

8. Verfahren gemäß einem der Ansprüche 6 bis 7, **dadurch gekennzeichnet, dass** im Rahmen der Bestimmung neuer Zielprozesswerte zunächst die Lage eines Prozesswertes in Bezug auf die Randfläche des Ausschussbereichs bestimmt und dann ein Zielprozesswert ermittelt wird, welcher einen größeren Abstand von der Randfläche aufweist oder kürzere Zykluszeiten hat.

9. Verfahren gemäß Anspruch 8, **dadurch gekennzeichnet, dass** der Zielprozesswertvektor $\mu$ in Richtung des Normalenvektors einer Tangentialebene der Randfläche, im dem Prozesswert am nächsten liegenden Punkt der Abbruchkante, vorzugsweise im Abstand von $6\sigma$, also um die sechsfache Standardabweichung entfernt, gewählt wird.

10. Verfahren gemäß einem der vorhergehenden Ansprüche, **dadurch gekennzeichnet, dass** die einem Werkstück zugehörigen Einstelldaten und Prozesswerte diesem über die Schussnummer eindeutig zugeordnet sind.

11. Verfahren gemäß Anspruch 10, **dadurch gekennzeichnet, dass** mit einem Vorhersageverfahren eine Funktion f : X - > Y bestimmt wird, die jedem Einstellsatz die erwarteten mittleren Prozesswerte zuordnet.

**Claims**

1. A method for the operation of a production machine in traceable alternating flow-line production, in which the transport lots or individual parts or modules are electronically identifiable, and which is associated with a process computer which provides setting data to a machine control unit and detects process values, wherein a classification in stock and reject occurs, **characterized in that** a reject part is uniquely associated with its shot number, and a classification of the process values leading to stock quantities and the process values leading to reject quantities is carried out on the basis of the classification in stock and reject and the detected process values respectively associated with a shot number, a determination of target process values occurs on the basis of the classification, and finally new setting data are calculated by using a prediction method from the target process values, wherein the two latter steps can also occur together.

2. A method according to claim 1, **characterized in that** reject reasons and optionally reject locations are defined.

3. A method according to one of the claims 1 or 2, **characterized in that** an allocation is made between reject part and error or reject reason on the basis of an automatic measurement or on the basis of a manual input.

4. A method according to one of the preceding claims, **characterized in that** the process computer stores all determined process values in connection with each workpiece by using a shot number and/or lot number.

5. A method according to one of the preceding claims, **characterized in that** the SVM (Support Vector Machines) method with hinge loss or logistic loss is used as the classification method.

6. A method according to one of the claims 1 to 5, **characterized in that** a workpiece is an anonymous component of a lot, wherein reject recognition occurs within a lot in four steps, namely:

   - exclusion of those process values from the further examination which were caused by errors of the sensors or during a standstill of the machine;
   - normalization of the process values by means of Z-transformation;
   - automatic seeking of strong variations in the process values, and
   - classification by determination of potential reject cones on the basis of these strongly deviating process values, whereupon all process values situated within the reject cone are regarded as belonging to the reject parts.

7. A method according to one of the preceding claims, **characterized in that** a reject can be recognized in the production machine during the running thereof, **in that** the process data are acquired online and it is determined by means of the calculated classification function whether reject parts or stock parts are concerned.

8. A method according to one of the claims 6 to 7, **characterized in that** within the scope of determining new target process values the position of a process value is determined at first with respect to the boundary surface of the reject area, and a target process value is determined which has a greater distance from the boundary surface or which has shorter cycle times.

9. A method according to claim 8, **characterized in that** the target process value vector $\mu$ is chosen in the direction of the normal vector of a tangential plane of the boundary surface, in the point of the termination edge closest to the process value, preferably at a distance of $6\sigma$, i.e. remote by six times the standard deviation.

10. A method according to one of the preceding claims, **characterized in that** the setting data and process values associated with a workpiece are uniquely allocated thereto via the shot number.

11. A method according to claim 10, **characterized in that** a function f : X - > Y is determined with a prediction method which assigns the expected mean process values to each setting record.

**Revendications**

1. Procédé de conduite d'une machine de fabrication dans la fabrication à la chaîne variable traçable, dans laquelle les lots de transport ou les pièces ou sous-ensembles isolés peuvent être identifiés de façon électronique, et à laquelle est associé un calculateur de processus qui fournit des données de réglage à une commande de machine et capte des valeurs de processus, une division entre « bon » et « rebut » étant faite,
caractérisé en ce qu'une pièce de rebut est clairement associée à son numéro de jet et la division entre bon et rebut ainsi que les valeurs de processus captées associée à chaque numéro de jet sont utilisées pour effectuer une classification des valeurs de processus aboutissant aux quantités « bonnes » et aux quantités de rebut, des valeurs de processus visées sont déterminées à l'aide de la classification et de nouvelles données de réglage sont finalement calculées en utilisant un procédé de prédiction à partir des valeurs de processus visées, les deux dernières étapes pouvant également avoir lieu ensemble.

2. Procédé selon la revendication 1, **caractérisé en ce que** les raisons de mise au rebut et éventuellement les lieux de mise au rebut sont définis.

3. Procédé selon l'une des revendications 1 ou 2, **caractérisé en ce qu'**une affectation entre une pièce au rebut et un défaut ou une raison de mise au rebut est réalisée sur la base d'une mesure automatique ou sur la base d'une entrée manuelle.

4. Procédé selon l'une des revendications précédentes, **caractérisé en ce que** le calculateur de processus enregistre pour chaque pièce d'oeuvre, en utilisant un numéro de jet et/ou un numéro de lot, toutes les valeurs de processus déterminées.

5. Procédé selon l'une des revendications précédentes, **caractérisé en ce que** la méthode de classification utilisée est la méthode SVM (machines à vecteurs de support) avec le coût charnière ou le coût logistique.

6. Procédé selon l'une des revendications 1 à 5, **caractérisé en ce qu'**une pièce d'oeuvre est un composant anonyme d'un lot, une reconnaissance des rebuts au sein d'un lot s'effectuant en quatre étapes, à savoir :

 • exclusion des valeurs de la suite de l'analyse des valeurs de processus résultant d'erreurs des capteurs ou survenant pendant un arrêt de la machine,
 • normalisation des valeurs de processus au moyen de la transformation Z,
 • recherche et exclusion automatiques des variations fortes des valeurs de processus et
 • classification par détermination des cônes de rebut possible à l'aide de ces valeurs de processus fortement divergentes,
 après quoi toutes les valeurs de processus se situant dans le cône de rebut sont considérées comme appartenant aux pièces de rebut.

7. Procédé selon l'une des revendications précédentes, **caractérisé en ce que** les rebuts peuvent être reconnus sur la machine de fabrication pendant le fonctionnement de celle-ci par le fait que les données de processus sont acquises en ligne et que la fonction de classification calculée est utilisée pour déterminer s'il s'agit de pièces de rebut ou de bonnes pièces.

**8.** Procédé selon l'une des revendications 6 à 7, **caractérisé en ce que** dans le cadre de la détermination de nouvelles valeurs de processus visées, la position d'une valeurs de processus est d'abord déterminée par rapport à la surface de bord de la zone de rebut puis une valeur de processus cible est déterminée, qui présente une plus grande distance par rapport à la surface de bord ou des temps de cycle plus courts.

**9.** Procédé selon la revendication 8, **caractérisé en ce que** le vecteur de valeurs de processus visées $\mu$ est choisi dans la direction du vecteur normal d'un plan tangentiel de la surface de bord, dans la valeur de processus au point le plus proche du bord de rupture, de préférence à une distance de $6\sigma$, autrement dit de six fois l'écart-type.

**10.** Procédé selon l'une des revendications précédentes, **caractérisé en ce que** les données de réglage et valeurs de processus correspondant à une pièce d'oeuvre sont clairement associées à celle-ci à l'aide du numéro de jet.

**11.** Procédé selon la revendication 10, **caractérisé en ce qu'**une fonction

f:X->Y

est déterminée à l'aide d'un procédé de prédiction pour associer à chaque ensemble de réglage les valeurs de processus moyennes attendues.

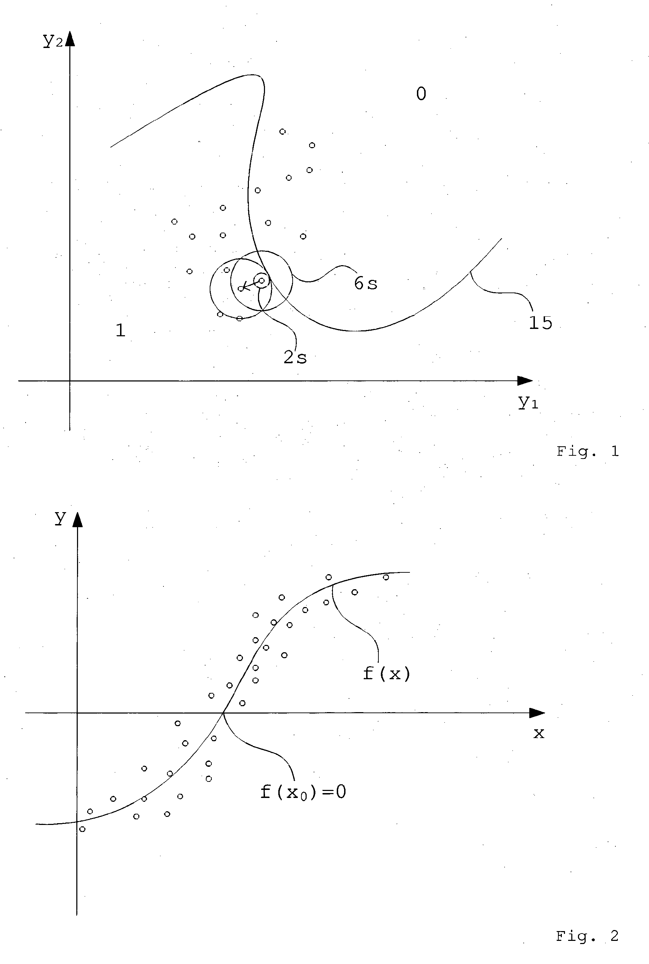

Fig. 1

Fig. 2

| | | | |
|---|---|---|---|
| Werkzeug | Werkzeug erkennen / plausibilisieren | | |
| Maschine | Werkzeug gültig | | Auftrag starten<br>- Artikel<br>- Sollstücke<br>- Sollschuss<br>- Istzähler Reset |
| Materialversorgung / Dosieranlage | | Material liefern / dosieren | |
| Prozessrechner | Werkzeug erfassen | Material erfassen → Artikel bestimmen → Auftrag bestimmen | |

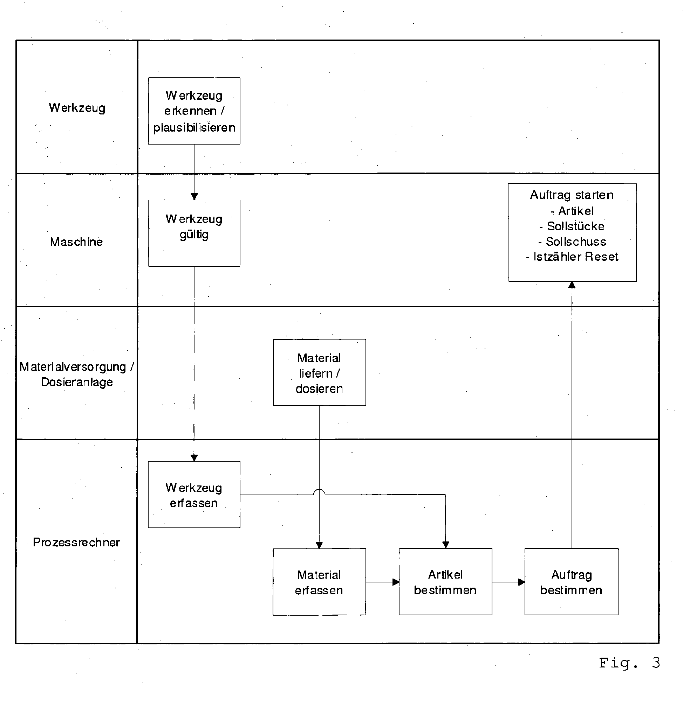

Fig. 3

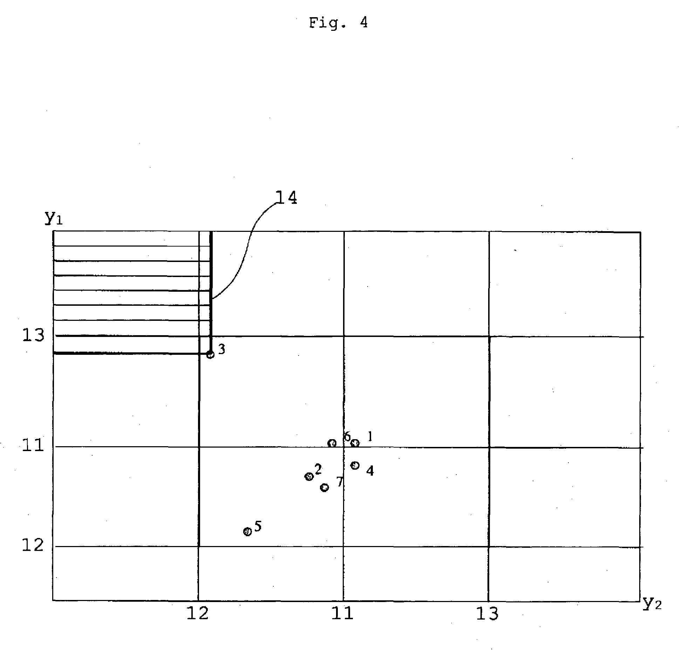

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19834797 C2
- WO 2007096248 A1
- DE 69126700 T2
- EP 0522061 B1